(19)

Europäisches
Patentamt
European
Patent Office
Office européen
des brevets

(11) **EP 4 040 567 A1**

(12) **EUROPEAN PATENT APPLICATION**
published in accordance with Art. 153(4) EPC

(43) Date of publication:
**10.08.2022 Bulletin 2022/32**

(21) Application number: **20871072.3**

(22) Date of filing: **29.09.2020**

(51) International Patent Classification (IPC):
**H01M 10/44** (2006.01)    **H01M 10/48** (2006.01)
**H02J 7/00** (2006.01)    **H02J 7/04** (2006.01)

(52) Cooperative Patent Classification (CPC):
**H01M 10/44; H01M 10/48; H02J 7/00; H02J 7/04;**
Y02E 60/10

(86) International application number:
**PCT/JP2020/037026**

(87) International publication number:
**WO 2021/065959 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.10.2019   JP 2019182498**

(71) Applicant: **DENSO CORPORATION**
**Kariya-city, Aichi 448-8661 (JP)**

(72) Inventor: **ZHOU, Bo**
**Kariya- city, Aichi 4488661 (JP)**

(74) Representative: **TBK**
**Bavariaring 4-6**
**80336 München (DE)**

(54) **CHARGING CONTROL DEVICE**

(57)    A charge control apparatus (15) is provided with an acquiring unit that acquires a temperature of the secondary battery (11) and a charge parameter of the secondary battery; a learning unit that learns when the secondary battery is being charged, based on the acquired charge parameter and the temperature of the secondary battery, a temperature rising ratio of the secondary battery in a prescribed period (TL) elapsed from a time when a charging of the secondary battery starts, and battery characteristics information including information associating with the charge parameter; a storage unit (15a) that stores the learned battery characteristics information; a command value calculation unit that calculates, prior to start of charging of the secondary battery, a command value of the charge parameter through the prescribed period from a charge start timing, based on a limit temperature rising ratio calculated in accordance with a difference between an initial temperature of the secondary battery and a limit temperature and the prescribed period, and the battery characteristics information stored in the storage unit; and an operation unit that operates a charger (14) to control the charge parameter from the charge start timing to be the command value.

FIG.1

## Description

Cross-Reference of Related Applications

The present application is based on and claims priority to Japanese Application No.2019-182498 filed on October 2, 2019, the contents of which are incorporated herein by reference.

[Technical Field]

The present disclosure relates to a charge control apparatus that controls a charge control of a secondary battery.

[Background Art]

For this type of control apparatus, as disclosed in PTL 1, a control apparatus is known in which an increase in temperature of the secondary battery is estimated based on the current temperature and charge/discharge current of the secondary battery. This control apparatus is configured to select, based on the estimated result, one upper limit charge/discharge current value from among a plurality of upper limit charge/discharge current values such that the temperature of the secondary battery does not exceed the upper limit charge/discharge limit. Thus, the secondary battery is prevented from being in an overheat state during charge/discharge control of the secondary battery and further avoid degradation of the secondary battery.

[Citation List]

[Patent Literature]

[PTL 1] JP 2018-170904A

[Summary of the Invention]

In the case where a charge control of the secondary battery is conducted, according to the control apparatus disclosed in the PTL1, an increase in the temperature of the secondary battery is estimated based on current temperature and current charge current of the secondary battery at every specific period. Thus, the upper limit charge current of the secondary current is updated at every specific period and the charge current of the secondary current can be changed. As a result, there is a concern that a charging time of the secondary battery may be significantly varied.

The present disclosure has a main object to provide a charge control apparatus capable of preventing a charge period of a secondary battery from being significantly varied while preventing the secondary battery from being in an overheating state.

The present disclosure provides a charge control apparatus applied for a system provided with a secondary battery and a charger electrically connected to the secondary battery, the charge control apparatus performing a charge control of the secondary battery by operating the charger. The charge control apparatus includes: an acquiring unit that acquires a temperature of the secondary battery and a charge parameter which is either a charge current or a charge power of the secondary battery; a learning unit that learns when the secondary battery is being charged, based on the acquired charge parameter and the temperature of the secondary battery, a temperature rising ratio which is a temperature rise quantity of the secondary battery in a prescribed period elapsed from a time when a charging of the secondary battery starts, and battery characteristics information including information associating with the charge parameter of the secondary battery; a storage unit that stores the learned battery characteristics information; a command value calculation unit that calculates, prior to an activation of a charging of the secondary battery, a command value of the charge parameter through the prescribed period elapsed from a charge start timing of the secondary battery, based on a limit temperature rising ratio calculated in accordance with a difference between an initial temperature of the secondary battery and a limit temperature of the secondary battery and the prescribed period, and the battery characteristics information stored in the storage unit; and an operation unit that operates the charger to control the charge parameter from the charge start timing of the secondary battery to be the calculated command value.

According to the present disclosure, a command value of the charge parameter is calculated based on the temperature rising ratio calculated in accordance with a difference between the initial temperature of the secondary battery and the limit temperature and the battery characteristics information stored in the storage unit. Hence, as the command value used for the prescribed period from the charge start timing of the secondary battery, a command value can be determined where the temperature of the secondary battery does not exceed the limit temperature. Thus, the secondary battery can be prevented from being in an overheating state during the charge control. According to the present disclosure, the battery characteristics information including the temperature rising ratio used when calculating the command value is learned based on the temperature and the charge parameter of the secondary battery. Accordingly, calculation accuracy of the command value where the temperature of the secondary battery does not exceed the limit temperature can be improved.

Also, according to the present disclosure, prior to start of charging of the secondary battery, the command value is calculated for a prescribed period from the charge start timing, and the calculated command value is basically used through the prescribed period. Therefore, the charge period of the secondary battery can be prevented from being significantly varied from the prescribed period.

According to the above-described preset disclosure, the charging period of the secondary battery can be prevented from being significantly varied while preventing the secondary battery being in an overheating state.

[Brief Description of the Drawings]

The above objectives and other objectives, features and advantages of the present disclosure will be clarified further by the following detailed description with reference to the accompanying drawings. The drawings are:

FIG.1 is an overall configuration of an on-board charge system according to a first embodiment;
FIG.2 is a diagram showing a control unit and a sensor or the like as a periphery configuration thereof;
FIG.3 is a flowchart showing a charge control process;
FIG.4 is a graph showing an outline of a charge current map;
FIG.5 is a graph showing a relationship between a temperature deviation and a correction quantity;
FIG.6 is a flowchart showing of a learning process
FIG.7 is a graph showing a relationship between an internal resistance and a temperature determination value of a secondary battery;
FIG.8 is a graph showing a learning mode of a temperature rising ratio;
FIG.9A and 9B are timing diagrams each showing an example of a charge control process;
FIG. 10 is a flowchart showing a charge control process according to a second embodiment;
FIG. 11 is a flowchart showing a learning process;
FIG. 12 is a graph showing a relationship between a charge current, an internal resistance and a heat quantity
FIG. 13 is a flowchart showing a charge control process according to a third embodiment;
FIG. 14 is a flowchart showing a learning process;
FIG. 15 is a diagram showing a relationship between a charge current, a thermal capacity and a heat quantity;
FIG.16 is a flowchart showing a learning process according to a fourth embodiment; and
FIG.17 is a flowchart showing a charge control process according to a fifth embodiment.

[Description of Embodiments]

(First Embodiment)

Hereinafter, a first embodiment in which a charge control apparatus according to the present disclosure is embodied will be described with reference to drawings. The charge control apparatus according to the present embodiment is mounted on a vehicle.

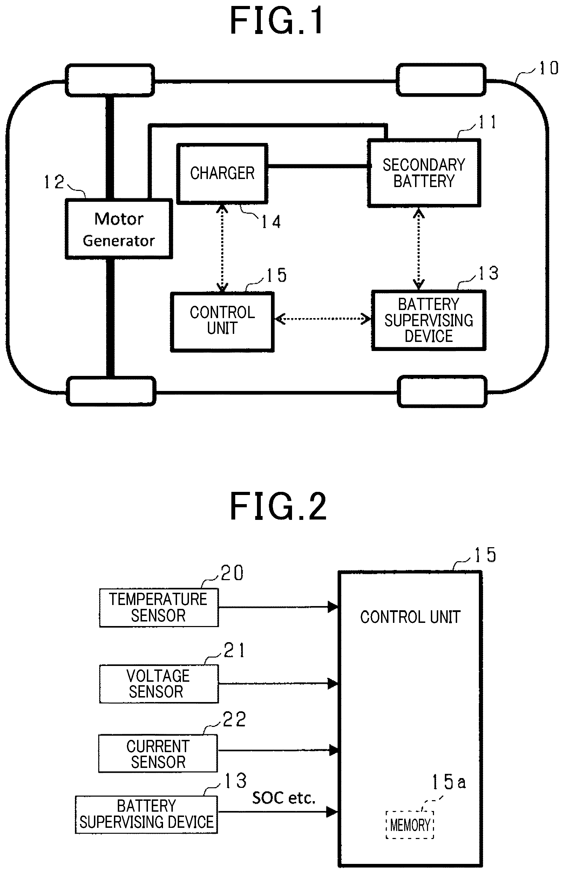

As shown in Fig.1, a vehicle 10 is provided with a secondary battery 11 and a rotary electric machine 12. The secondary battery 11 is, for example, a lithium ion battery or a nickel hydrogen battery, and a battery pack is intended to be utilized according to the present embodiment. The rotary electric machine 12 is driven with power supplied by the secondary battery 11, and serves as a travelling power source of the vehicle 100.

The vehicle 10 is provided with a battery supervising device 13, a charger 14 and a control unit 15. The battery supervising device 13 has a function of detecting a terminal voltage of each battery cell that constitutes the secondary battery 11 and a function of calculating a SOC or the like of each battery cell. The charger 14 is configured to charge the secondary battery 11 with a power supplied from power supply equipment provided outside the vehicle 10.

As shown in Fig.2, the vehicle 10 is provided with a temperature sensor 20, a voltage sensor 21 and a current sensor 22. The temperature sensor 20 detects the temperature of the secondary battery 11, the voltage sensor 21 detects the terminal voltage of the secondary battery 11 and the current sensor 22 detects the current flowing through the secondary battery 11. The detection values of respective sensors 20 to 22 and the information such as SOC calculated by the battery supervising device 13 is transmitted to the control unit 15.

The control unit 15 performs a charge control process for charging the secondary battery 11 from the charger 14 based on the received detection value and the information thereof. Note that the function of the control unit 15 can be provided, for example, by software stored in a tangible memory device and a computer that executes the software, or by hardware, or combination thereof.

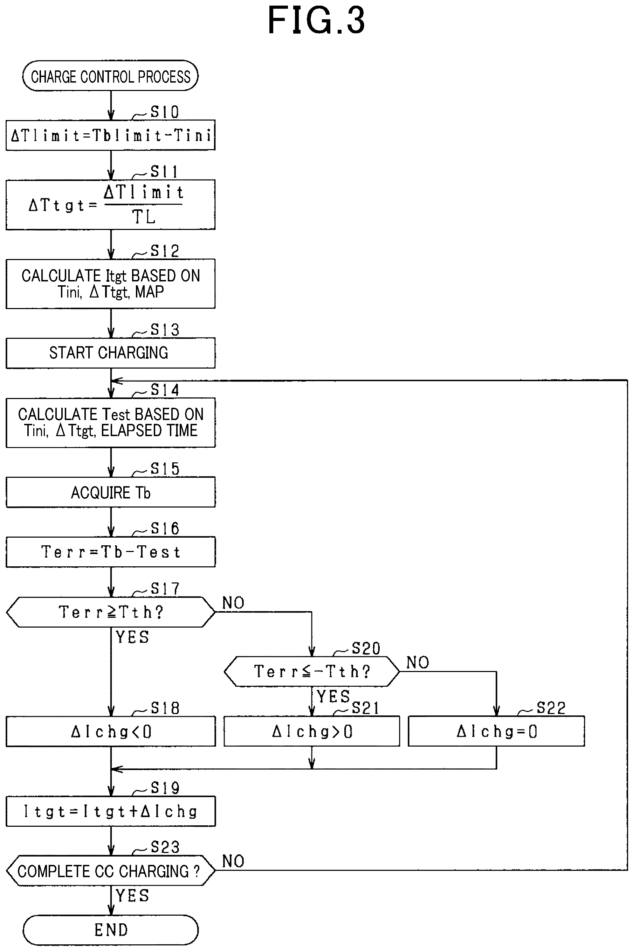

Fig.3 shows the charge control process. The charge control process is executed when the control unit 15 determines that a charge request of the secondary battery 11 is present.

Prior to an activation of the charging of the secondary battery 11, the processes of steps S10 to S12 are executed. At step S10, the process acquires an initial temperature $T_{ini}$ which is the temperature detected by the temperature sensor 20 prior to the activation of the charging of the secondary battery 11. Then, the initial temperature $T_{ini}$ is subtracted from a limit temperature $T_{blimit}$ of the secondary battery 11, thereby acquiring an allowable temperature rise quantity $\Delta T_{limit}$. The limit temperature $T_{blimit}$ is set to be, for example, an allowable upper limit temperature of the secondary battery 11 capable of preventing the secondary battery from being deteriorated.

At step S11, the allowable temperature rise quantity $\Delta T_{limit}$ is divided by a prescribed period TL, thereby calculating a limit temperature rising ratio $\Delta T_{tgt}$. According to the present embodiment, the prescribed period TL is set to be a period for charging the secondary battery 11 with a constant current control.

At step S12, the process calculates a command charge current Itgt of the secondary battery 11 based on a charge current map where the command charge current Itgt is defined correlating with the initial temperature Tini and a temperature rising ratio ΔT. The temperature rising ratio ΔT defines an amount of temperature rise at the secondary battery 11 from a time when a charging of the secondary battery starts to a time when a prescribed period TL elapses. At step S12, the command charge current Itgt is calculated by selecting a command charge current Itgt among command charge current Itgt defined in the charge current map which corresponds to the initial temperature Tini acquired at step S10, and the temperature rising ratio ΔT which is the same value as the limit temperature rising ratio ΔTtgt. Note that processes of steps S10 to S12 correspond to command value calculation unit.

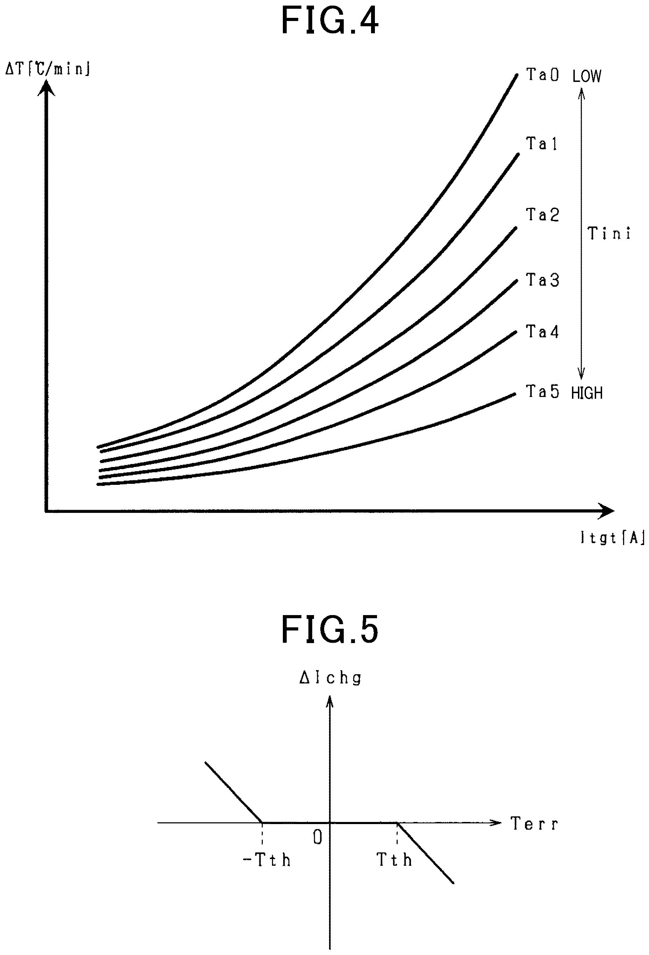

In the charge current map, as shown in Fig.4, the larger the temperature rising ratio ΔT, the larger the command charge current Itgt is. The charge current map is stored in a memory 15a (corresponds to storage unit) included in the control unit 15. The memory 15a is a non-transitory tangible recording media excluding ROM (e.g. nonvolatile memory excluding ROM). The charge current map is updated by a learning process which will be detailed later.

Referring back to explanation of Fig.3, at step S13, the process starts to operate the charger 14 such that the charge current of the secondary battery 11 is controlled to be the command charge current Itgt calculated at step S12, thereby starting the charging of the secondary battery 11 with a constant current control. The operation of the control unit 15 corresponds to operation unit. Hereinafter, processes at steps S14 to S23 are repeatedly executed at a predetermined control period until the process determines, at step S23, that the charging of the secondary battery 11 is completed.

According to the present embodiment, a value calculated at step S12 is basically used as the command charge current Itgt for a period from a time when the charging of the secondary battery 11 starts to a time when the prescribed period TL elapses. This is because, according to the present embodiment, a fan for colling the secondary battery 11 and a cooling apparatus such as cooling water passage are not provided in the vehicle 10. Specifically, in this case, when the temperature of the secondary battery 11 once becomes high during the charging of the secondary battery 11, since the temperature cannot be decreased soon, the temperature of the secondary battery 11 may exceed the limit temperature Tblimit. In particular, when the charging is conducted during the vehicle is stopped, an air cooling effect of the second battery 11 accompanying with the travelling of the vehicle cannot be utilized. Hence, the temperature of the secondary battery 11 may exceed the limit temperature Tblimit. Therefore, prior to starting the charging of the secondary battery 11, the command charge current Itgt which prevents the temperature of the secondary battery 11 from exceeding the limit temperature Tblimit is determined by processes at steps S10 to S12, and this command charge current Itgt is used for a constant current control period.

At step S14, the process calculates the temperature estimated value Test of the secondary battery 11 based on the initial temperature Tinit, the limit temperature rising ratio ΔTtgt and the elapse time from a time when the charge starts at step S13. In more detail, the initial temperature Tini is added to a value where the limit temperature rising ratio and the elapse time are multiplied, thereby calculating the temperature estimating value Test. Note that the process at step S14 corresponds to temperature estimating unit.

At step S15, the process acquires the current temperature detected value Tb of the secondary battery 11 detected by the temperature sensor 20.

At step S16, the temperature estimated value Test is subtracted from the temperature detected value Tb, thereby calculating the temperature deviation Terr.

At step S17, the process determines whether the temperature deviation Terr is larger than or equal to a threshold Tth (> 0). Note that the threshold Tth at step S17 corresponds to first threshold.

When the determination at step S17 is affirmative, the process proceeds to step S18, and sets the command value correction quantity ΔIchg to be negative value. In more detail, as shown in Fig.5, the command value correction quantity ΔIchg is set such that the larger the absolute valuer of the temperature deviation Terr in the positive side, the larger the absolute value of the command value correction quantity ΔIchg in the negative side is.

The process proceeds to step S19 after executing the process at step S18, and adds the command value correction quantity ΔIchg set at step S18 to the command charge current Itgt calculated at step S12, thereby calculating the command charge current Itgt which is a value after the correction. Thus, the command charge current Itgt calculated at step S12 is corrected to be decreased. Thereafter, the charge current of the secondary battery 11 is controlled to be the corrected command charge current Itgt.

At step S17, when the process determines that the temperature deviation Terr is smaller than the threshold Tth, the process proceeds to step S20 and determines whether the temperature deviation Terr is less than or equal to -Tth. Note that -Tth at step S20 corresponds to a second threshold.

When the determination at step S20 is affirmative, the process proceeds to step S21 and sets the command value correction quantity ΔIchg to be a positive value. In more detail, as shown in Fig.5, the process sets the absolute value of the command value correction quantity ΔIchg such that the larger the absolute value of the temperature deviation Terr in the negative side, the larger the command value correction quantity ΔIchg in the positive side is.

The process proceeds to step S19 after executing the process at step S21, and adds the command value correction quantity ΔIchg set at step S21 to the command charge current Itgt calculated at step S12, thereby calculating the command charge current Itgt which is a value after the correction. Thus, the command charge current Itgt calculated at step S12 is corrected to be increased. Thereafter, the charge current of the secondary battery 11 is controlled to be the corrected command charge current Itgt. Note that processes at steps S17 to S21 correspond to correction unit.

In the case where the temperature deviation Terr is determined to be larger than -Tth at step S20, the process proceeds to step S22 and sets the command value correction quantity ΔIchg to be 0 (see Fig.5). In the case where the process proceeds to step S19 after executing the process at step S22, the process does not execute the correction of the command charge current Itgt calculated at step S12

The process proceeds to step S23 after executing the process at step S19, and determines whether the charging of the secondary battery with the constant current control is completed. That is, the process determines whether the prescribed period TL has elapsed. When the determination at step S19 is negative, the process proceeds to step S14. On the other hand, when the determination at step S19 is affirmative, the process proceeds to a process of charge control of the secondary battery 11 with the constant voltage control.

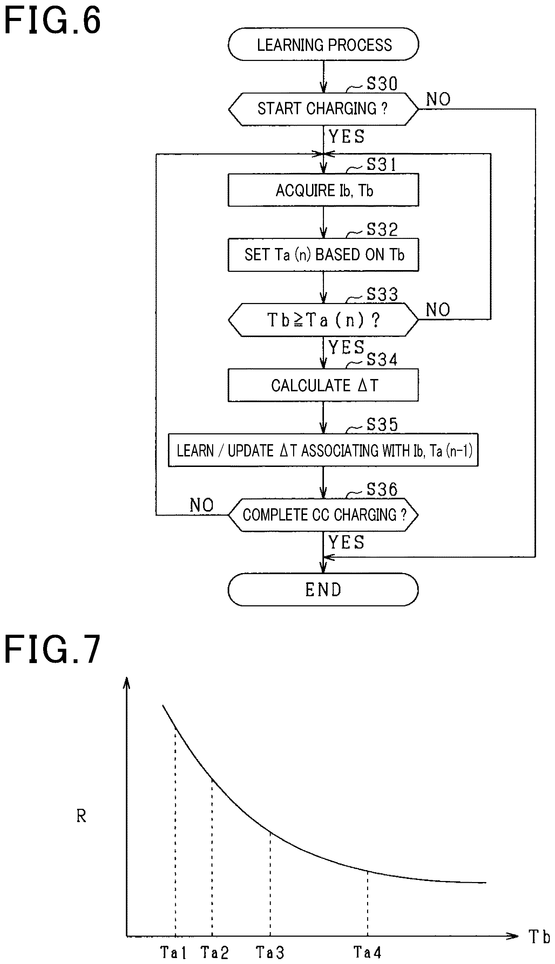

Subsequently, with reference to Fig.6, a learning process will be described. This process is repeatedly executed at a predetermined control period by the control unit 15, for example.

At step S30, the process determines whether the charging of the secondary battery 11 is started similar to the process at step S13 shown in Fig.3.

At step S31, the process acquires current charge current detection value Ib (corresponds to charge parameter) of the secondary battery which is detected by the current sensor 22 and current temperature detection value Tb of the secondary battery 11 which is detected by the temperature sensor 20.

At step S32, the process sets a high temperature side determination value Ta (n) based on the acquired temperature detection value Tb. As shown in Fig. 7, the high temperature side determination value Ta (n) is selected from among a plurality of temperature determination values which divides a temperature range where the temperature detection value Tb can take. According to the present embodiment, each temperature range is set such that the lower the temperature detection value Tb, the narrower the temperature range is. This is determined based on a fact that the lower the temperature of the secondary battery 11, the larger an amount of increase in the internal resistance R per an amount of decrease in the unit temperature of the secondary battery 11. Fig.7 exemplifies first to fourth temperature determination values Ta1 to Ta4.

At step S32, the process sets, among the plurality of temperature determination values, the temperature determination value which is the closet value to the acquired temperature detection value Tb and higher than the acquired temperature detection value Tb, to be a high temperature side determination value Ta (n). When updating the temperature determination value Ta (n) at step S32, the process sets the high temperature side determination value Ta (n) set immediately before the updating to be a low temperature side determination value Ta (n-1). For example, in the current control period, when updating the high temperature side determination value Ta (n) to be a third temperature determination value Ta3 from a second temperature determination value Ta2, the process sets the second temperature determination value Ta2 which is a value immediately before the updating, to be the low temperature side determination value Ta (n-1).

At step S33, the process determines whether the acquired temperature detection value Tb reaches the high temperature side determination value Ta (n) set at step S32. When determined that the acquired temperature detection value Tb does not reach the high temperature side determination value Ta (n) at step S33, the process proceeds to step S31, and proceeds to step S34 when determined that the acquired temperature detection value Tb reaches the high temperature side determination value Ta (n).

At step S34, the process divides a value where the current low temperature side determination value Ta (n-1) is subtracted from the current high temperature side determination value Ta (n) by a time TT required for the temperature detection value Tb to reach the high temperature side determination value Ta (n) from a time when the temperature detection value Tb becomes the low temperature side determination value Ta (n-1), thereby calculating the temperature rising ratio ΔT.

At step S35, the process learns the temperature rising ratio ΔT associating with the charge current detection value Ib and the current low temperature side determination value Ta (n-1) which are acquired at step S31. Then, the process stores the learned temperature rising ratio ΔT, the command charge current Itgt having the same value as the acquired charge current detection value Ib and the initial temperature Tini having the same value as the current low temperature side determination value Ta (n-1) into the memory 15a while being associated with each other, thereby updating the charge current map. Note that the process at step S35 corresponds to learning unit.

At step S36, similar to step S23 shown in Fig. 3, the process determines whether the charging of the secondary battery 11 with the constant current control is completed.

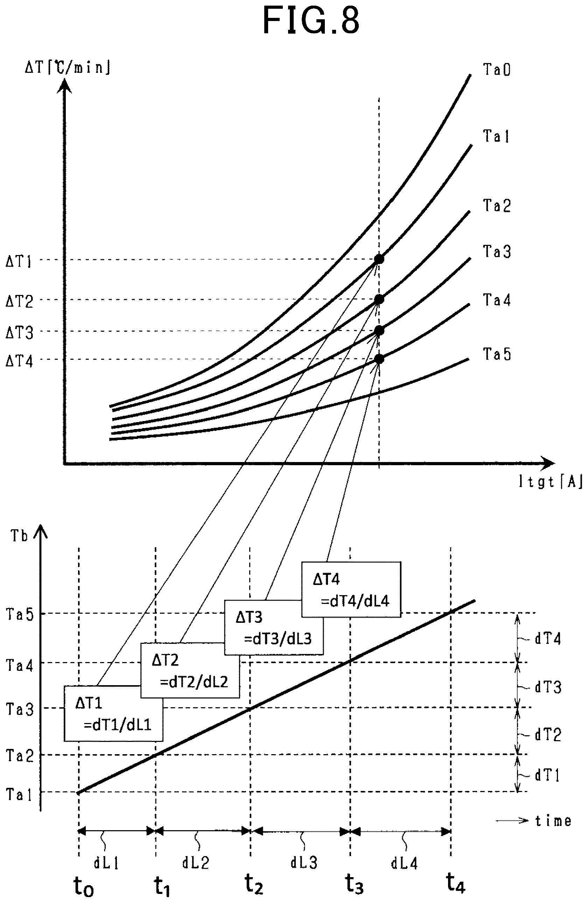

Fig. 8 shows an example of learning process of the temperature rising ratio ΔT. In Fig.8, the charge current detection value Ib is set to be constant.

At time t0 to t1, the high temperature side determination value Ta (n) is set to be the second temperature determination value Ta2, and the low temperature side determination value Ta (n-1) is set to be the first temperature determination value Ta1. Hence, in the case where Ta2-Ta1 in a period from t0 to t1 is defined as dT1, a period from t0 to t1 is defined as dL1, the temperature rising ratio $\Delta$T1 is learned as dT1/dL1. Then, the learned temperature rising ratio $\Delta$T1 is stored in the memory 15a associating with the command charge current Itgt of which the value is the same as the acquired charge current detection value Ib and the initial temperature Tini of which the value is the same as the first temperature determination value Ta1, thereby updating the charge current map. Similarly, the learning process is executed for a period from t1 to t2, a period from t2 to t3, and a period from t3 to t4.

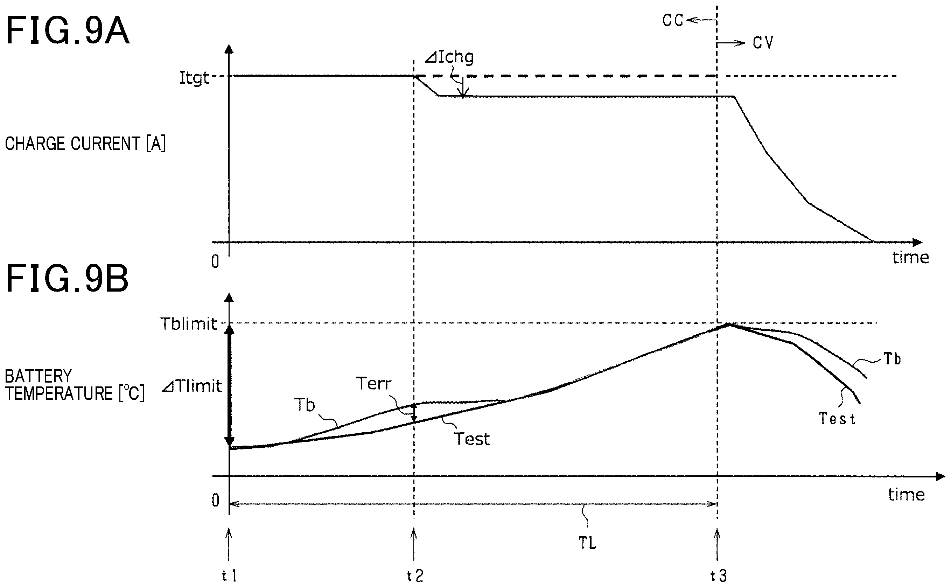

Figs.9A and 9B show an example of a charge control process. Fig.9A shows a change in the command charge current Itgt of the secondary battery 11 and Fig. 9B shows a change in the temperature detected value Tb and the temperature estimated value Test of the secondary battery 11.

The process calculates the allowable temperature rise quantity $\Delta$Tlimit based on the initial temperature Tini and the limit temperature Tblimit prior to time t1 at which a charge starts. Then, the process calculates the limit temperature rising ratio $\Delta$Ttgt based on the calculated allowable temperature rise quantity and the prescribed period TL, and calculates the command charge current Itgt based on the calculated limit temperature rising ratio $\Delta$Ttgt, the initial temperature Tini and the charge current map. Thereafter, at time t1, the charging of the secondary battery 11 is started based on the calculated command charge current Itgt.

Thereafter, at time t2, the process determines that the temperature deviation Terr is larger than the temperature estimated value Test by the threshold Tth or more. Hence, the command charge current Itgt is corrected to be decreased. At this moment, in order to avoid a rapid change in the command charge current Itgt, the command charge current may preferably be gradually changed. After time T3 at which the prescribed period TL elapses from time T1, the charging is performed for the secondary battery 11 with the constant current control.

According to the present embodiment described in detail, the following effects and advantages can be obtained.

The limit temperature rising ratio $\Delta$Ttgt is calculated based on the allowable temperature rise quantity $\Delta$Tlimit and the prescribed period TL. Then, the command charge current Itgt is calculated based on the calculated limit temperature rising ratio $\Delta$Ttgt, the initial temperature Tini and the charge current map. Hence, in the prescribed period TL from the charge start timing of the secondary battery 11, the command charge current Itgt which prevents the temperature of the secondary battery 11 from exceeding the limit temperature Tblimit can be determined, and the secondary battery 11 can be prevented from being in an overheating state in an overheat state during charge/discharge control process. Here, learning of the temperature rising ratio $\Delta$T used for calculating the command charge current Itgt is performed based on the temperature detected value Tb and the charge current detection value Ib. Accordingly, accuracy of calculating the command charge current Itgt which prevents the temperature of the secondary battery 11 from exceeding the limit temperature Tblimit can be enhanced.

Also, prior to the charging start of the secondary battery 11, the process calculates the command charge current Itgt for the prescribed period from the charge start timing. Hence, the charge period of the secondary battery 11 can be prevented from being significantly changed from the prescribed period TL.

In a period from the charging of the secondary battery is started to a time when the prescribed period TL elapses, learning for the temperature rising ratio $\Delta$T is performed for each temperature range where the acquired temperature detection value Tb passes through, among respective temperature ranges divided by respective temperature determination values. Hence, learning process for the temperature rising ratio $\Delta$T can be frequently performed when the charge control process is performed. As a result, in the case where the charge control process is performed in the next cycle, the calculation accuracy of the command charge current Itgt based on the charge current map can be improved.

After starting the charging of the secondary battery 11, when the temperature deviation Terr, which is a difference between the acquired temperature detection value Tb and the temperature estimated value Test, is larger than or equal to the threshold Tth, the command charge current Itgt is corrected to be decreased. On the other hand, when the temperature deviation Terr is lower than or equal to -Tth, the command charge current Itgt is corrected to be increased. Thus, even in the case where the command charge current Itgt determined prior to start of the charging us varied from the appropriate value, the temperature of the secondary battery 11 can be prevented from exceeding the limit temperature Tblimit.

(Modifications of the first embodiment)

The absolute value of the threshold (>0) used for step S17 shown in Fig.3 and the absolute value of the threshold (<0) used for step S20 may be set to be different values.

(Second Embodiment)

Hereinafter, with reference to the drawings, for the second embodiment, configurations different from the first embodiment will be mainly described. According to the present embodiment, a learning process for the internal resistance as battery characteristics information of the secondary battery 11 is also performed.

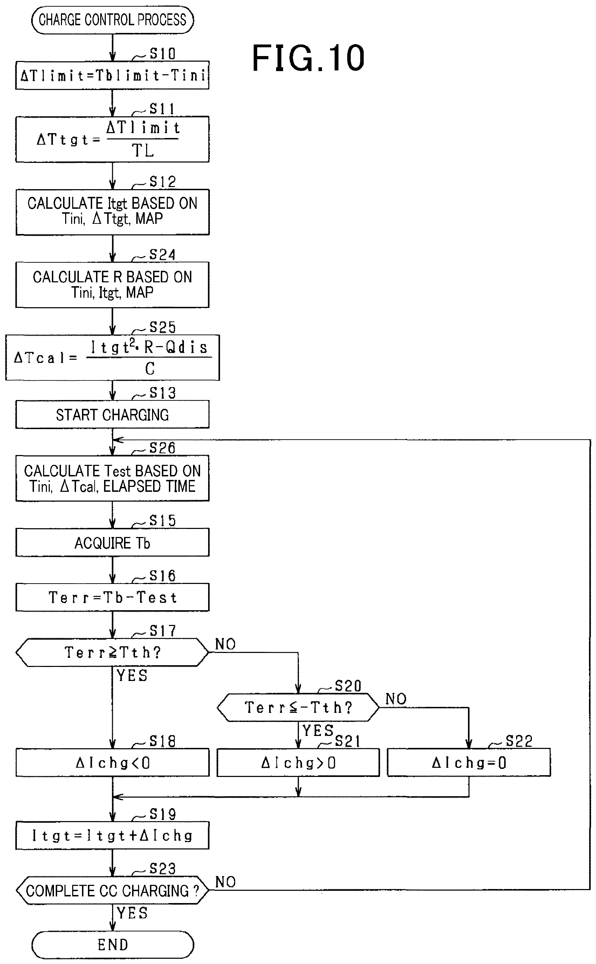

Fig. 10 shows a procedure of the charge control process according to the present embodiment. In Fig.10, processes same as those shown in Fig.3 will be applied with the same reference symbols for the sake of convenience.

After executing the process at step S12, the process proceeds to step S24 and calculates the internal resistance R based on the internal resistance map where the internal resistance R of the secondary battery 11 is defined associated with the temperature of the secondary battery 11 and the charge current of the secondary battery 11. In more detail, among the internal resistance defined in the internal resistance map, an internal resistance R corresponding to a temperature value the same as the initial temperature Tini acquired at step S10 and a charge current value which is the same as the command charge current Itgt calculated at step S12 is selected, thereby calculating the internal resistance R.

At step S25, a reference temperature increasing quantity ΔTcal represented by the following equation (eq1) based on the command charge current Itgt calculated at step S12, the internal resistance R calculated at step S24, the thermal capacity C of the secondary battery 11 and a heat dissipation quantity Qdis.
[Math 1]

$$\Delta T_{cal} = \frac{I_{tgt}^2 \cdot R - Q_{dis}}{C} \quad \dots \quad (eq1)$$

In the above-equation (eq1), for the thermal capacity C and the heat dissipation quantity Qdis, predetermined values determined by experiment or the like are utilized. The above equation (eq1) is derived from the following equation (eq2) indicating a relationship between the heat quantity Qf, the heat dissipation quantity Qdis and the thermal capacity C of the secondary battery 11, and the following equation (eq3) indicating a relationship between the heat quantity Qf, the charge current and the internal resistance R of the secondary battery 11.
[Math 2]

$$Q_f - Q_{dis} = C \cdot \Delta T_{cal} \quad \dots \quad (eq2)$$

[Math 3]

$$Q_f = I_{tgt}^2 \cdot R \quad \dots \quad (eq3)$$

Thereafter, at step S26, the process calculates the temperature estimated value Test of the secondary battery 11 based on the initial temperature Tini, the reference temperature increasing quantity ΔTcal calculated at step S25 and the elapsed time from a time when the charge starts at step S13. Specifically, the initial temperature Tini is added to a value where the reference temperature increasing quantity ΔTcal and the elapsed time are multiplied, thereby calculating the temperature estimated value Test.

Note that the reference temperature increasing quantity ΔTcal used for step S26 may preferably be updated based on the current temperature detection value Tb and the command charge current Itgt with a method similar to that of steps S24 and S25.

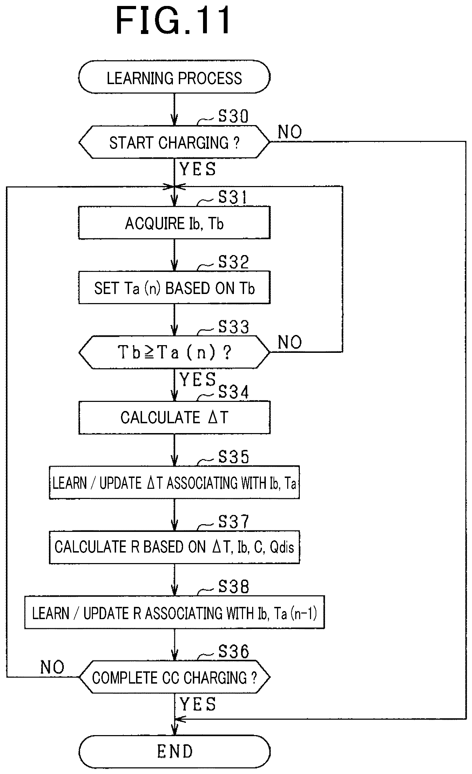

Subsequently, with reference to Fig. 11, a learning process will be described. This process is repeatedly executed by the control unit 15 at a predetermined period, for example. In Fig. 11, processes the same as those shown in Fig.6 will be applied with the same reference symbols for the sake of convenience.

After executing the process at step S35, the process proceeds to step S37 and calculates, based on the temperature rising ratio ΔT calculated at step S34, the current charge current detection value Ib, the thermal capacity C and the heat dissipation quantity Qdis, the internal resistance R with the following equation (eq4).
[Math 4]

$$R = \frac{C \cdot \Delta T + Q_{dis}}{I_b^2} \quad \dots \quad (eq4)$$

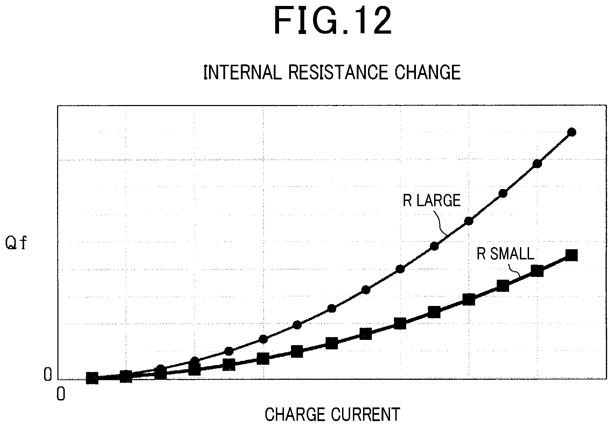

At step S38, the process learns the internal resistance R associating with the charge current detection value Ib acquired at step S31 and the low temperature side determination value Ta (n-1). The learned internal resistance R is stored into the memory 15a associating with a charge current value which is the same as the acquired charge current detection value Ib and a temperature value which is the same as the current low temperature side determination value Ta (n-1), thereby updating the internal resistance map. The above-described learning process for the internal resistance R is performed based on a fact that the heat quantity Qf of the secondary battery 11 becomes larger when the internal resistance R is largecompared to a case of low internal resistance R as shown in Fig.12

According to the above-described embodiment, since the temperature estimated value Test is calculated based on the learned internal resistance R, accuracy of estimating the temperature during the charge control process can be enhanced.

(Third Embodiment)

Hereinafter, with reference to the drawings, for the third embodiment, configurations different from the second embodiment will be mainly described. According to the present embodiment, in the learning process, instead of the internal resistance, a learning process for the thermal capacity of the secondary battery 11 is performed.

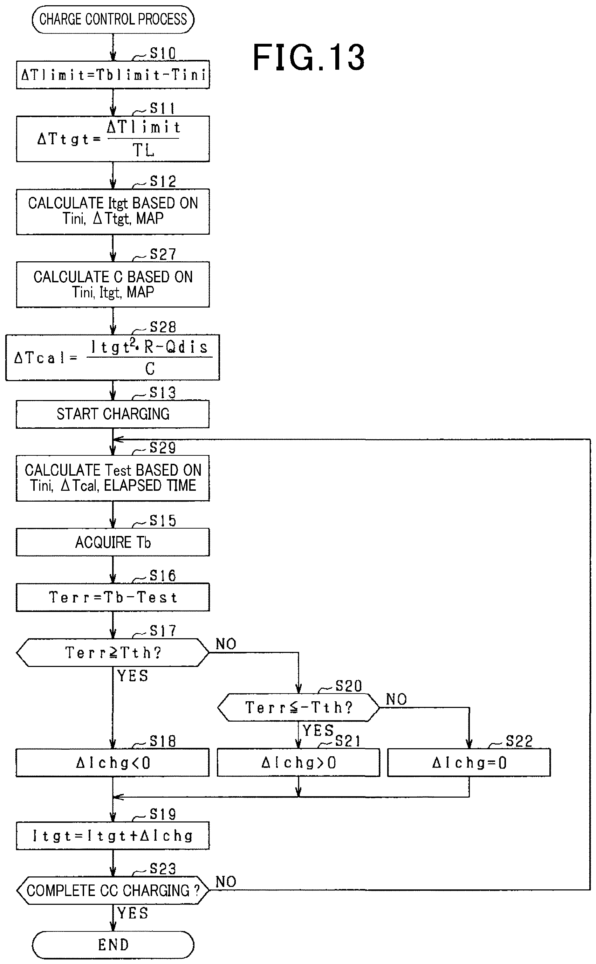

Fig. 13 shows a charge control process according to the present embodiment. In Fig. 13, processes same as those shown in Fig. 10 will be applied with the same reference symbols for the sake of convenience.

After executing the process at step S12, the process proceeds to step S27 and calculates the thermal capacity C based on the thermal capacity map where the thermal capacity C of the secondary battery 11 is defined associating with the temperature of the secondary battery 11 and the charge current of the secondary battery 11. In more detail, the process selects, among the thermal capacity C defined in the thermal capacity map, a thermal capacity C corresponding to a temperature value which is the same as the initial temperature Tini acquired at step S10 and a charge current value which is the same as a command charge current Itgt calculated at step S12, thereby calculating the thermal capacity C.

At step S28, the process calculates, based on the command charge current Itgt calculated at step S12, the thermal capacity C calculated at step S27, the internal resistance R of the secondary battery 11 and the heat dissipation quantity Qdis from the secondary battery, the reference temperature increasing quantity ΔTcal expressed by the above equation (eq1). In this case, predetermined values determined by an experiment or the like may be used for the internal resistance R and the heat dissipation quantity Qdis.

Thereafter, at step S29, the process calculates, based on the initial temperature Tini, the reference temperature increasing quantity ΔTcal calculated at step S28 and the elapsed time from a time when the charge starts at step S13, the temperature estimated value Test of the secondary battery 11. Specifically, the initial temperature Tini is added to a value where the reference temperature increasing quantity ΔTcal and the elapse time are multiplied, thereby calculating the temperature estimated value Test.

Note that, similar to the second embodiment, the reference temperature increasing quantity ΔTcal used for step S26 may preferably be updated, based on the current temperature detection value Tb and the command charge current Itgt, with a method similar to steps S27 and S28.

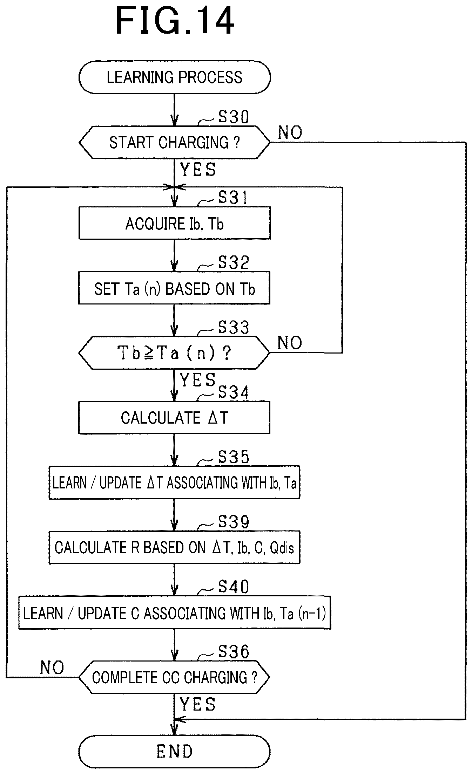

Next, with reference to Fig. 14, a learning process will be described. This process is repeatedly executed at a predetermined control period, for example. In Fig. 14, processes same as those shown in Fig.11 will be applied with the same reference symbols for the sake of convenience.

After executing the process at step S35, the process proceeds to step S39 and calculates, based on the temperature rising ratio ΔT calculated at step S34, the current charge current detection value Ib, the internal resistance R and the heat dissipation quantity Qdis, with the following equation (eq5).

[Math 5]

$$C = \frac{I_{tgt}^2 \cdot R - Q_{dis}}{\Delta T} \quad \dots \quad (eq5)$$

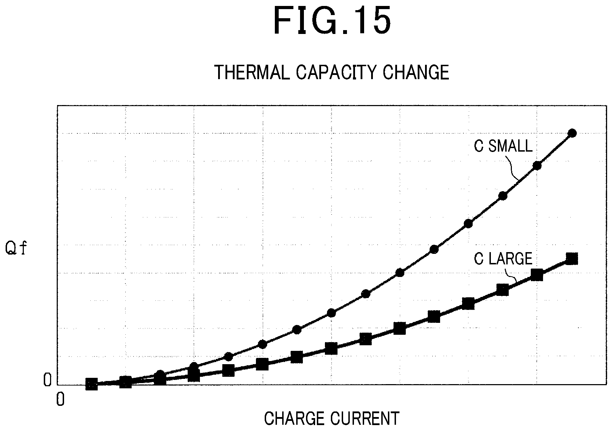

At step S38, the process learns the thermal capacity C associating with the charge current detection value Ib acquired at step S31 and the low temperature side determination value Ta (n-1). The learned thermal capacity C is stored into the memory 15a associating with a charge current value which is the same as the acquired charge current detection value Ib and a temperature value which is the same as the current low temperature side determination value Ta (n-1), thereby updating the thermal capacity map. The above-described learning process for the thermal capacity C is performed based on a fact that the heat quantity Qf with higher thermal capacity C is smaller than a case of smaller thermal capacity C as shown in Fig. 15

According to the above-described embodiment, effects and advantages similar to those in the second embodiment can be obtained.

(Fourth Embodiment)

Hereinafter, with reference to the drawings, for the fourth embodiment, configurations different from the first embodiment will be mainly described. According to the present embodiment, when occurrence of an abnormality in the secondary battery 11 is determined, the learning process is discontinued.

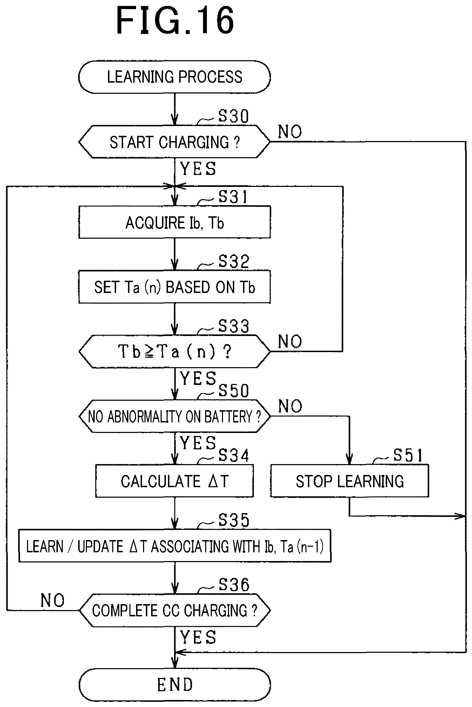

Fig.16 shows a learning process according to the present embodiment. For example, this process is repeatedly executed at a predetermined control process by the control unit 15. In Fig. 16, processes the same as those shown in Fig.6 will be applied with the same reference symbols for the sake of convenience.

When determination at step S33 is affirmative, the process proceeds to step S50 and determines whether an abnormality has occurred in the secondary battery 11. A method for determining an abnormality of the secondary battery 11 can be accomplished by various known methods. Note that the process at step S50 corresponds to an abnormality determination unit.

When determined that no abnormality has occurred at step S50, the process proceeds to step S34. On the other hand, when determined that no abnormality has occurred at step S50, the process proceeds to step S51 and discontinue the process.

According to the above-described present embodiment, erroneous learning of the temperature rising ratio ΔT can be avoided.

(Fifth Embodiment)

Hereinafter, with reference to the drawings, for the fifth embodiment, configurations different from the first embodiment will be mainly described. According to the present embodiment, the contents of the correction process is changed.

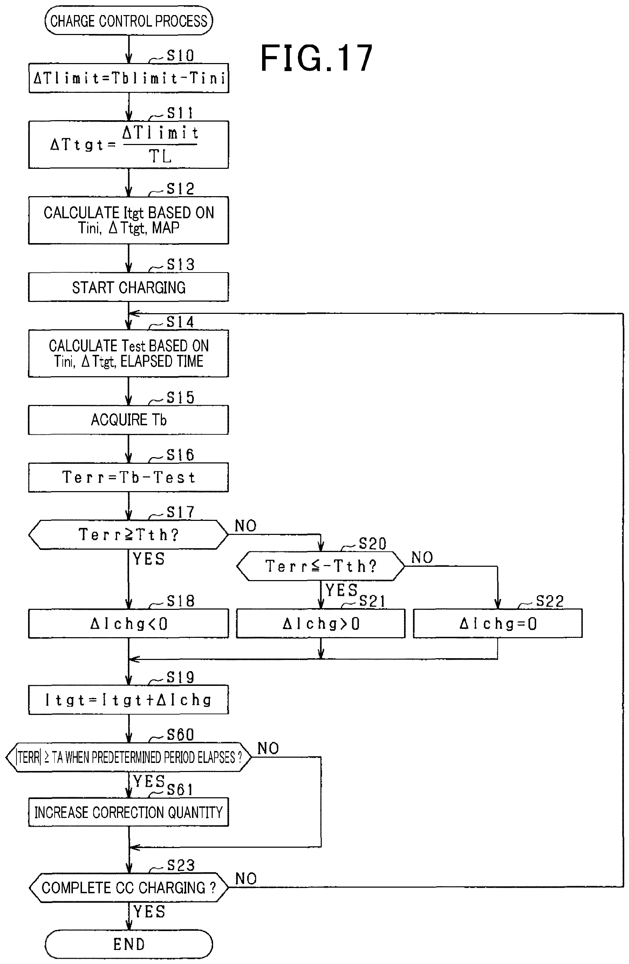

Fig.17 shows a charge control process according to the present embodiment. In Fig. 17, processes same as those shown in Fig.3 will be applied with the same reference symbols for the sake of convenience.

At step S60, the process determines, when a predetermined period elapsed from a time when the process at step S19 is executed, whether the absolute value of the temperature deviation Terr is larger than or equal to a predetermined value TA. The predetermined value TA corresponds to a first predetermined value which is set to be larger than 0 and smaller than or equal to the threshold Tth. According to the present embodiment, the predetermined value TA is set to be smaller than the threshold Tth.

When the determination at step S60 is negative, the process proceeds to step S23. On the other hand, when the determination at step S60 is affirmative, the process proceeds to step S61 and sets the absolute value of the command value correction quantity ΔIchg to be multiplied by α (α>1) while maintaining the sign of the command value correction quantity ΔIchg set at step S18 or S21.

According to the process at step S61, after executing the process of step S18, the command charge current Itgt is further corrected to be decreased. On the hand, after executing the process of step S21, the command charge current Itgt is further corrected to be increased. Thus, the temperature of the secondary battery 11 can be reliably prevented from exceeding the limit temperature Tblimit

(Modifications of Fifth Embodiment)

In the process shown in Fig.17, the predetermined value used for step S60 after executing the process of step S18 and the predetermined value used for step S60 after executing the process of step S21 may be set to be different values.

(Other Embodiment)

Note that the above-described respective embodiments may be modified in the following manners.

In the charge current map, the command charge current Itgt may be defined associating with at least one of the number of charging of the secondary battery 11 and the SOC of the secondary battery 11 in addition to the temperature rising ratio ΔT.

In the internal resistance map, the internal resistance value R may be defined associating with at least one of the number of chargings of the secondary battery 11 and the SOC of the secondary battery 11 in addition to the charge current and the temperature of the secondary battery 11. Further, in the thermal capacity map, the thermal capacity C may be defined associating with at least one of the number of chargings of the secondary battery 11 and the SOC of the secondary battery 11 in addition to the charge current and the temperature of the secondary battery 11.

The present disclosure may be applied to a system without being mounted on a vehicle.

Instead of the charge current map, a command charge power Ptgt of the secondary battery 11 may be calculated based on the charge power map where the command charge power Ptgt of the secondary battery 11 is defined associating with the initial temperature Tini and the temperature rising ratio ΔT. In this case, the control unit 15 may operate the charger 14 to control the charge power from the charge start timing of the secondary battery 11 to be calculated command charge power Ptgt. Hereinafter, a charge power map will be described with reference to the process shown in Fig.6.

The control unit 15 calculates the charge power Pb (charging parameter) during the charging of the secondary battery based on the charge current detection value Ib and the voltage detection value Vb of the voltage sensor 21.

The control unit 15 learns, at step S35, the temperature rising ratio ΔT associated with the calculated charge power Pb and the current low temperature side determination value Ta (n-1). The process stores the learned temperature rising ratio ΔT into the memory 15a associating with the command charge power Ptgt of which the value is the same as the acquired charge power Pb and the initial temperature Tini of which the value is the same as the current low temperature side determination value Ta (n-1), thereby updating the charge power map. For process other than the updating process of the charge power map, in the above-described respective embodiments, instead of the charge current detection value Ib and the command charge current Itgt, the charge power Pb and the command charge current Ptgt may be utilized respectively.

The control unit and method thereof disclosed in the present disclosure may be accomplished by a dedicated computer constituted of a processor and a memory programmed to execute one or more functions embodied by computer programs. Alternatively, the control unit and method thereof disclosed in the present disclosure may be accomplished by a dedicated computer provided by a processor configured of one or more dedicated hardware logic circuits. Further, the control unit and method thereof disclosed in the present disclosure may be accomplished by one or more dedicated computer where a processor and a memory programmed to execute one or more functions, and a processor configured of one or more hardware logic circuits are combined. Furthermore, the computer programs may be stored, as instruction codes executed by the computer, into a computer readable non-transitory tangible recording media.

The present disclosure has been described in accordance with the embodiments. However, the present disclosure is not limited to the embodiments and structure thereof. The present disclosure includes various modification examples and modifications within the equivalent configurations. Further, various combinations and modes and other combinations and modes including one element or more or less elements of those various combinations are within the range and technical scope of the present disclosure.

**Claims**

1. A charge control apparatus (15) applied for a system provided with a secondary battery (11) and a charger (14) electrically connected to the secondary battery, the charge control apparatus performing a charge control of the secondary battery by operating the charger, the charge control apparatus comprising:

   an acquiring unit that acquires a temperature of the secondary battery and a charge parameter which is either a charge current or a charge power of the secondary battery;
   a learning unit that learns when the secondary battery is being charged, based on the acquired charge parameter and the temperature of the secondary battery, a temperature rising ratio which is a temperature rise quantity of the secondary battery in a prescribed period (TL) elapsed from a time when a charging of the secondary battery starts, and battery characteristics information including information associated with the charge parameter of the secondary battery;
   a storage unit (15a) that stores the learned battery characteristics information;
   a command value calculation unit that calculates, prior to start of charging of the secondary battery, a command value of the charge parameter through the prescribed period elapsed from a charge start timing of the secondary battery, based on a limit temperature rising ratio calculated in accordance with a difference between an initial temperature of the secondary battery and a limit temperature of the secondary battery and the prescribed period, and the battery characteristics information stored in the storage unit; and
   an operation unit that operates the charger to control the charge parameter from the charge start timing of the secondary battery to be the calculated command value.

2. The charge control apparatus according to claim 1, wherein

   a predetermined temperature range is divided into a plurality of temperature ranges by a plurality of temperature determination values;
   among a pair of adjacent values of the temperature determination values, a lower value is determined as a low temperature side determination value and a higher value is determined as a high temperature side determination value; and

the learning unit calculates the temperature rising ratio based on a period from a time when the acquired temperature of the secondary battery reaches the low temperature side determination value to a time when the acquired temperature of the secondary battery reaches the high temperature side determination value and a difference between the low temperature side determination value and the high temperature side determination value.

3. The charge control apparatus according to claim 2, wherein
   the learning unit performs, after starting charging of the secondary battery, learning of the battery characteristics information based on the acquired charge parameter and the acquired temperature of the secondary battery, for each temperature range where the acquired temperature of the secondary battery changes passing therethrough among the respective temperature ranges

4. The charge control apparatus according to any one of claims 1 to 3 further comprising:

   a temperature estimating unit that estimates, after starting the charging of the secondary battery, the temperature of the secondary battery based on the learned battery characteristics information; and
   a correction unit that performs, after starting a charging of the secondary battery, a correction process wherein a downward correction is performed to downwardly correct the calculated command value when the acquired temperature of the secondary battery is higher than the temperature estimated by the temperature estimating unit by a first threshold or more and an upward correction is performed for upwardly correcting the calculated command value when the acquired temperature of the secondary battery is lower than the temperature estimated by the temperature estimating unit by a second threshold or more.

5. The charge control apparatus according to claim 4, wherein

   a first predetermined value is defined as a value lower than or equal to the first threshold and a second predetermined value is defined as a value lower than or equal to the second threshold;
   the correction unit performs, when a predetermined period elapses from a time when the correction process is performed, a downward correction for further downwardly correct the calculated command value when the acquired temperature of the secondary battery is higher than the temperature estimated by the temperature estimating unit by the first predetermined value or more, and performs, when the predetermined period elapses from a time when the correction process is performed, an upward correction for further upwardly correct the calculated command value when the acquired temperature of the secondary battery is lower than the temperature estimated by the temperature estimating unit by the second predetermined value or more.

6. The charge control apparatus according to either claim 4 or 5, wherein

the learning unit learns, after starting a charging of the secondary battery, an internal resistance of the secondary battery as the battery characteristics information based on a charge current of the secondary battery; and
the temperature estimating unit estimates the temperature of the secondary battery based on the learned internal resistance and the charge current of the secondary battery.

7. The charge control apparatus according to either claim 4 or 5, wherein
the learning unit learns, after starting a charging of the secondary battery, a thermal capacity of the secondary battery as the battery characteristics information, based on the charge current of the secondary battery.

8. The charge control apparatus according to any one of claims 1 to 7, wherein

the charge control apparatus is provided with an abnormality determination unit that determines whether an abnormality occurs on the secondary battery; and
the learning unit stops learning the battery characteristics information when determined that an abnormality occurs on the secondary battery.

# FIG.1

# FIG.2

# FIG.3

```
         ┌─────────────────────────┐
         │ CHARGE CONTROL PROCESS  │
         └─────────────────────────┘
                      │  ～S10
         ┌─────────────────────────┐
         │ ΔTlimit=Tblimit-Tini    │
         └─────────────────────────┘
                      │  ～S11
         ┌─────────────────────────┐
         │ ΔTtgt= ΔTlimit/TL       │
         └─────────────────────────┘
                      │  ～S12
         ┌─────────────────────────┐
         │ CALCULATE Itgt BASED ON │
         │ Tini, ΔTtgt, MAP        │
         └─────────────────────────┘
                      │  ～S13
         ┌─────────────────────────┐
         │ START CHARGING          │
         └─────────────────────────┘
                      │  ～S14
         ┌─────────────────────────┐
         │ CALCULATE Test BASED ON │
         │ Tini, ΔTtgt, ELAPSED TIME│
         └─────────────────────────┘
                      │  ～S15
         ┌─────────────────────────┐
         │ ACQUIRE Tb              │
         └─────────────────────────┘
                      │  ～S16
         ┌─────────────────────────┐
         │ Terr=Tb-Test            │
         └─────────────────────────┘
                      │  ～S17
         <   Terr≧Tth?   >── NO
              │ YES
```

$$\Delta Tlimit = Tblimit - Tini \quad S10$$

$$\Delta Ttgt = \frac{\Delta Tlimit}{TL} \quad S11$$

- S12 CALCULATE Itgt BASED ON Tini, ΔTtgt, MAP
- S13 START CHARGING
- S14 CALCULATE Test BASED ON Tini, ΔTtgt, ELAPSED TIME
- S15 ACQUIRE Tb
- S16 $Terr = Tb - Test$
- S17 $Terr \geqq Tth?$  NO / YES
- S20 $Terr \leqq -Tth?$  NO / YES
- S18 $\Delta Ichg < 0$
- S21 $\Delta Ichg > 0$
- S22 $\Delta Ichg = 0$
- S19 $Itgt = Itgt + \Delta Ichg$
- S23 COMPLETE CC CHARGING ?  NO / YES
- END

# FIG.4

ΔT[℃/min]

Ta0 LOW
Ta1
Ta2
Ta3
Ta4
Ta5 HIGH

Tini

Itgt[A]

# FIG.5

ΔIchg

Terr

-Tth        0        Tth

# FIG.6

```
LEARNING PROCESS
        |
        v  S30
  START CHARGING ?  ──NO──┐
        |YES              |
        v  S31            |
   ACQUIRE Ib, Tb         |
        |                 |
        v  S32            |
  SET Ta (n) BASED ON Tb  |
        |                 |
        v  S33            |
    Tb ≧ Ta (n) ?  ──NO──┘
        |YES
        v  S34
    CALCULATE ΔT
        |
        v  S35
LEARN / UPDATE ΔT ASSOCIATING WITH Ib, Ta (n-1)
        |
        v  S36
COMPLETE CC CHARGING ?  ──NO──┐ (loop back)
        |YES
        v
       END
```

# FIG.7

# FIG.8

# FIG.9A

CHARGE CURRENT [A]

CC ← | → CV

Itgt ---

⊿Ichg

0       time

# FIG.9B

BATTERY
TEMPERATURE [°C]

Tblimit ---

⊿Tlimit

Tb

Terr

Test

Tb

Test

0       time

t1       t2       TL       t3

EP 4 040 567 A1

# FIG.10

CHARGE CONTROL PROCESS

S10
$$\Delta Tlimit = Tblimit - Tini$$

S11
$$\Delta Ttgt = \frac{\Delta Tlimit}{TL}$$

S12
CALCULATE Itgt BASED ON
Tini, ΔTtgt, MAP

S24
CALCULATE R BASED ON
Tini, Itgt, MAP

S25
$$\Delta Tcal = \frac{Itgt^2 \cdot R - Qdis}{C}$$

S13
START CHARGING

S26
CALCULATE Test BASED ON
Tini, ΔTcal, ELAPSED TIME

S15
ACQUIRE Tb

S16
$$Terr = Tb - Test$$

S17
$$Terr \geqq Tth?$$ — NO

YES

S20
$$Terr \leqq -Tth?$$ — NO

YES

S18
$$\Delta Ichg < 0$$

S21
$$\Delta Ichg > 0$$

S22
$$\Delta Ichg = 0$$

S19
$$Itgt = Itgt + \Delta Ichg$$

S23
COMPLETE CC CHARGING ? — NO

YES

END

# FIG.11

```
        LEARNING PROCESS

               ↓  ～S30
        START CHARGING ?  ───── NO ───┐
               │                      │
              YES                     │
        ┌──────┼──────────────────┐   │
        │      ↓  ～S31            │   │
        │   ACQUIRE Ib, Tb        │   │
        │      ↓  ～S32            │   │
        │   SET Ta (n) BASED ON Tb│   │
        │      ↓  ～S33            │   │
        │   Tb≧Ta ( n ) ?  ── NO ─┼───┤
        │      │                  │   │
        │     YES  ～S34          │   │
        │      ↓                  │   │
        │   CALCULATE ΔT          │   │
        │      ↓  ～S35           │   │
        │   LEARN / UPDATE ΔT ASSOCIATING WITH Ib, Ta
        │      ↓  ～S37           │   │
        │   CALCULATE R BASED ON ΔT, Ib, C, Qdis
        │      ↓  ～S38           │   │
        │   LEARN / UPDATE R ASSOCIATING WITH Ib, Ta (n-1)
        │      ↓  ～S36           │   │
        └─ NO ─ COMPLETE CC CHARGING ? │
               │                      │
              YES                     │
               ↓ ←────────────────────┘
            END
```

# FIG.12

INTERNAL RESISTANCE CHANGE

# FIG.13

CHARGE CONTROL PROCESS

S10
$\Delta Tlimit = Tblimit - Tini$

S11
$\Delta Ttgt = \dfrac{\Delta Tlimit}{TL}$

S12
CALCULATE Itgt BASED ON
Tini, ΔTtgt, MAP

S27
CALCULATE C BASED ON
Tini, Itgt, MAP

S28
$\Delta Tcal = \dfrac{Itgt^2 \cdot R - Qdis}{C}$

S13
START CHARGING

S29
CALCULATE Test BASED ON
Tini, ΔTcal, ELAPSED TIME

S15
ACQUIRE Tb

S16
$Terr = Tb - Test$

S17
$Terr \geqq Tth?$ —NO→

YES

S20
$Terr \leqq -Tth?$ —NO→

YES

S18
$\Delta Ichg < 0$

S21
$\Delta Ichg > 0$

S22
$\Delta Ichg = 0$

S19
$Itgt = Itgt + \Delta Ichg$

S23
COMPLETE CC CHARGING ? —NO

YES

END

# FIG.14

```
        ( LEARNING PROCESS )
                 │
                 │ ～S30
         ／START CHARGING ?＼────NO───┐
                 │ YES                │
       ┌─────────┤                    │
       │         ▼ ～S31              │
       │  ┌──────────────────┐        │
       │  │  ACQUIRE Ib, Tb  │        │
       │  └──────────────────┘        │
       │         │ ～S32              │
       │  ┌──────────────────┐        │
       │  │ SET Ta (n) BASED ON Tb │  │
       │  └──────────────────┘        │
       │         │ ～S33              │
       │   ／Tb≧Ta ( n ) ?＼──NO──────┤
       │         │ YES                │
       │         │    S34             │
       │  ┌──────────────────┐        │
       │  │   CALCULATE ΔT   │        │
       │  └──────────────────┘        │
       │         │ ～S35              │
       │ ┌────────────────────────────────┐
       │ │ LEARN / UPDATE ΔT ASSOCIATING WITH Ib, Ta │
       │ └────────────────────────────────┘
       │         │ ～S39              │
       │ ┌────────────────────────────────┐
       │ │ CALCULATE R BASED ON ΔT, Ib, C, Qdis │
       │ └────────────────────────────────┘
       │         │ ～S40              │
       │ ┌────────────────────────────────┐
       │ │ LEARN / UPDATE C ASSOCIATING WITH Ib, Ta (n-1) │
       │ └────────────────────────────────┘
       │         │ ～S36              │
       │ NO ／COMPLETE CC CHARGING ?＼    │
       └───      │ YES                │
                 ▼◄───────────────────┘
            (   END   )
```

# FIG.15

THERMAL CAPACITY CHANGE

# FIG.16

```
        ( LEARNING PROCESS )
                  │
                  ▼  ～S30
         < START CHARGING ? >──NO──────────────┐
                  │                            │
                 YES                           │
        ┌─────────▶───┐                        │
        │         ▼  ～S31                      │
        │    │ ACQUIRE Ib, Tb │                │
        │         │                            │
        │         ▼  ～S32                      │
        │  │ SET Ta (n) BASED ON Tb │          │
        │         │                            │
        │         ▼  ～S33                      │
        │   < T b ≧ T a ( n ) ? >──NO───────────┤
        │         │                            │
        │        YES                           │
        │         ▼  ～S50                      │
        │ < NO ABNORMALITY ON BATTERY ? >──NO──┐│
        │         │                           ││
        │        YES                          ││
        │         ▼  ～S34          ▼  ～S51    ││
        │  │ CALCULATE ΔT │   │ STOP LEARNING │││
        │         │                    │       │
        │         ▼  ～S35              └───────┼──┐
        │ │ LEARN / UPDATE ΔT ASSOCIATING      │  │
        │ │        WITH Ib, Ta (n-1) │         │  │
        │         │                            │  │
   NO   │         ▼  ～S36                      │  │
        └──< COMPLETE CC CHARGING ? >          │  │
                  │                            │  │
                 YES                           │  │
                  ▼◀───────────────────────────┘◀─┘
              ( END )
```

# FIG.17

CHARGE CONTROL PROCESS

S10
$\Delta Tlimit = Tblimit - Tini$

S11
$\Delta Ttgt = \dfrac{\Delta Tlimit}{TL}$

S12
CALCULATE Itgt BASED ON
Tini, $\Delta$Ttgt, MAP

S13
START CHARGING

S14
CALCULATE Test BASED ON
Tini, $\Delta$Ttgt, ELAPSED TIME

S15
ACQUIRE Tb

S16
$Terr = Tb - Test$

S17
$Terr \geqq Tth?$ — NO

YES

S20
$Terr \leqq -Tth?$ — NO

YES

S18
$\Delta Ichg < 0$

S21
$\Delta Ichg > 0$

S22
$\Delta Ichg = 0$

S19
$Itgt = Itgt + \Delta Ichg$

S60
$|TERR| \geqq TA$ WHEN PREDETERMINED PERIOD ELAPSES ? — NO

YES

S61
INCREASE CORRECTION QUANTITY

S23
COMPLETE CC CHARGING ? — NO

YES

END

## INTERNATIONAL SEARCH REPORT

| | International application No. |
|---|---|
| | PCT/JP2020/037026 |

A.  CLASSIFICATION OF SUBJECT MATTER
H01M 10/44(2006.01)i; H01M 10/48(2006.01)i; H02J 7/00(2006.01)i; H02J 7/04(2006.01)i
FI: H02J7/04 L; H02J7/00 Y; H01M10/48 301; H01M10/48 P; H01M10/44 Q
According to International Patent Classification (IPC) or to both national classification and IPC

B.  FIELDS SEARCHED

Minimum documentation searched (classification system followed by classification symbols)
H01M10/44; H01M10/48; H02J7/00; H02J7/04

Documentation searched other than minimum documentation to the extent that such documents are included in the fields searched
Published examined utility model applications of Japan     1922–1996
Published unexamined utility model applications of Japan   1971–2020
Registered utility model specifications of Japan           1996–2020
Published registered utility model applications of Japan   1994–2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2002-165380 A (TOKYO R&D CO., LTD.) 07 June 2002 (2002-06-07) column 2, lines 25-29, column 6, line 28 to column 8, line 50, fig. 1-5 | 1-8 |
| A | JP 2018-170904 A (HITACHI AUTOMOTIVE SYSTEMS, LTD.) 01 November 2018 (2018-11-01) paragraphs [0002], [0007], [0010], [0018]-[0023], fig. 1-4 | 1-8 |
| A | JP 2005-137103 A (MAKITA CORPORATION) 26 May 2005 (2005-05-26) paragraphs [0015]-[0016], [0025]-[0030], fig. 1, 7-8 | 1-8 |
| A | JP 2010-233360 A (TOYOTA MOTOR CORP.) 14 October 2010 (2010-10-14) paragraphs [0001], [0060], [0121], fig. 1, 8 | 1-8 |
| A | JP 6-203877 A (CANON INC.) 22 July 1994 (1994-07-22) paragraphs [0014]-[0015], fig. 1-2 | 1-8 |

☐  Further documents are listed in the continuation of Box C.      ☒  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 November 2020 (30.11.2020) | 08 December 2020 (08.12.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT<br>Information on patent family members | | International application No.<br>PCT/JP2020/037026 | |
|---|---|---|---|
| Patent Documents referred in the Report | Publication Date | Patent Family | Publication Date |
| JP 2002-165380 A | 07 Jun. 2002 | US 2005/0099154 A1<br>paragraphs [0001], [0030]-[0058], fig. 5-9<br>WO 2002/043219 A1<br>EP 1345304 A1<br>CN 1395756 A<br>KR 10-0582639 B1 | |
| JP 2018-170904 A | 01 Nov. 2018 | WO 2018/179855 A1 | |
| JP 2005-137103 A | 26 May 2005 | US 2005/0093517 A1<br>paragraphs [0063]-[0072], [0090]-[0107], fig. 1, 7-8<br>US 2009/0039837 A1<br>EP 1528651 A2 | |
| JP 2010-233360 A | 14 Oct. 2010 | (Family: none) | |
| JP 6-203877 A | 22 Jul. 1994 | (Family: none) | |

Form PCT/ISA/210 (patent family annex) (January 2015)

**REFERENCES CITED IN THE DESCRIPTION**

**Patent documents cited in the description**

- JP 2019182498 A

- JP 2018170904 A